# EUROPÄISCHE PATENTSCHRIFT

(11) **EP 2 427 585 B1**
(45) Veröffentlichungstag und Bekanntmachung des Hinweises auf die Patenterteilung: **12.08.2020**
(21) Anmeldenummer: 10717174.6
(22) Anmeldetag: 07.05.2010
(51) Int. Cl.: C23C 4/12, C23C 4/134, C23C 4/137

(54) **VERFAHREN ZUM BESCHICHTEN EINES SUBSTRATS**
Method for coating a substrate
Procédé de revêtement d'un substrat

(30) Priorität: 08.05.2009 EP 09159805
(43) Veröffentlichungstag der Anmeldung: 14.03.2012
(73) Patentinhaber: Oerlikon Metco AG, Wohlen, 5610 Wohlen (CH)
(72) Erfinder: DAMANI, Rajiv, J., CH-8404 Winterthur (CH); GINDRAT, Malko, CH-5610 Wohlen (CH)
(74) Vertreter: Intellectual Property Services GmbH
(86) Internationale Anmeldenummer: PCT/EP2010/056276
(87) Internationale Veröffentlichungsnummer: WO 2010/128147

(56) Entgegenhaltungen:
- EP-A- 0 960 954
- EP-A- 1 911 858
- EP-A- 2 025 772
- EP-A1- 2 030 669
- WO-A-03/087422

## Beschreibung

Die Erfindung betrifft ein Verfahren zum Beschichten eines Substrats sowie ein Substrat mit einer Beschichtung gemäss dem Oberbegriff des unabhängigen Anspruchs der jeweiligen Kategorie.

Thermische Spritzverfahren haben sich bewährt, um auf Substraten Beschichtungen abzuscheiden, beispielsweise Korrosionsschutz- oder Erosionsschutzschichten. Für diese werden insbesondere auch metallische oder karbidische Werkstoffe verwendet, um auf dem Substrat eine metallische Schicht oder eine Hartmetallschicht oder eine Karbidschicht zu erzeugen. Insbesondere für die Hartmetall- oder die Karbidschichten werden heute typischerweise Normaldruck-Plasmaspritzverfahren (APS: Atmospheric Plasma Spraying) oder Hochgeschwindigkeitsflammspritzverfahren (HVOF: High Velocity Oxy Fuel) erfolgreich eingesetzt.

Eine Beschränkung dieser Verfahren ist darin zu sehen, dass mit ihnen nur in der direkten Sichtlinie (line of sight) beschichtet werden kann, das bedeutet innere oder versteckte Oberflächen des zu beschichtenden Substrats, die sich im geometrischen Schattenbereich des Prozessstrahls befinden, können im allgemeinen nicht beschichtet werden.

Die EP 2 025 772 A1 beschreibt ein Plasmaspritzverfahren zum Beschichten eines Substrats, mittels welchem auch Oberflächen, die sich im geometrischen Schattenbereich des Prozessstrahls befinden, beschichtet werden können. Bei diesem Verfahren werden die Prozessparameter so eingestellt, dass ein substanzieller Anteil des Beschichtungsmaterials in die Dampfphase übergeht und die Abscheidung der Schicht auf dem Substrat aus der Dampfphase heraus erfolgt. Damit entsteht auf dem Substrat eine anisotrop strukturierte Schicht, wobei längliche Korpuskel weitgehend senkrecht zur Oberfläche des Substrats stehend ausgerichtet sind und materialarme Übergangsbereiche die Korpuskel gegeneinander begrenzen.

Die EP 1 911 858 A1 beschreibt ebenfalls ein Plasmaspritzverfahren zum Beschichten eines Substrats, mittels welchem auch Oberflächen, die sich im geometrischen Schattenbereich des Prozessstrahls befinden, beschichtet werden können. Bei diesem Verfahren werden die Prozessparameter so eingestellt, das das Beschichtungsmaterial in die Dampfphase übergeht und auf dem Substrat eine kolumnare Schicht abgeschieden wird. Ein anderes Verfahren zum Beschichten eines Substrats mittels LPPS-TF-Plasmaspritzens wird im Dokument EP2030669 A1 offenbart.

Es ist daher eine Aufgabe der Erfindung ein Verfahren zum Beschichten eines Substrats bereitzustellen, mit welchem auch solche Oberflächen eines Substrats beschichtet werden können, die sich nicht in der direkten Sichtlinie des Prozessstrahls befinden. Insbesondere soll dieses Verfahren auf für die Erzeugung von Hartmetall- oder Karbidschichten auf metallischen Substraten geeignet sein. Ferner soll durch die Erfindung ein derartig beschichtetes Substrat vorgeschlagen werden.

Die diese Aufgabe lösenden Gegenstände der Erfindung sind durch den unabhängigen Anspruch 1 gekennzeichnet.

Erfindungsgemäss wird Verfahren zum Beschichten eines Substrats vorgeschlagen, bei welchem mittels Plasmaspritzens ein Ausgangsmaterial in Form eines Prozessstrahls auf das Substrat aufgespritzt wird, wobei das Ausgangsmaterial bei einem niedrigen Prozessdruck, der höchstens 20 000 Pa ist, in ein den Prozessstrahl defokussierendes Plasma injiziert und dort teilweise oder vollständig in eine flüssige oder plastifizierte Phase geschmolzen wird, wobei das Ausgangsmaterial (P) eine metallische Matrix oder eine Metalllegierung enthält, die Temperatur des Ausgangsmaterials (P) im Prozessstrahl (2) kleiner ist als die Siedetemperatur der metallischen Matrix bzw. der Metalllegierung, und wobei ein Gasfluss für den Prozessstrahl eine Gesamtflussrate von 50 bis 200 SLPM (Standardliter pro Minute) aufweist, so dass das Substrat durch Abscheidung aus der flüssigen oder plastifizierten Phase in mindestens einem Bereich beschichtet wird, der sich bezüglich des Prozessstrahls im geometrischen Schatten befindet.

Bei diesem Verfahren handelt es sich um ein spezielles Plasmaspritzverfahren, welches gattungsgemäss in der WO-A-03/087422 oder auch in der US-A- 5 853 815 beschrieben wird, nämlich ein thermisches Spritzen zur Herstellung eines sogenannten LPPS-Dünnfilms (LPPS = Low Pressure Plasma Spraying).

Speziell handelt es sich um einen LPPS-Dünnfilm-Prozess (LPPS-TF = LPPS Thin Film). Bei diesem wird ein konventionelles LPPS-Plasmaspritzverfahren verfahrenstechnisch abgewandelt, wobei ein von Plasma durchströmter Raum ("Plasmaflamme" oder "Plasmastrahl") aufgrund der Änderungen ausgeweitet und auf eine Länge von bis zu 2.5 m ausgedehnt wird. Die geometrische Ausdehnung des Plasmas führt zu einer gleichmässigen Aufweitung - einer "Defokussierung" - des Prozessstrahls, der mit einem Fördergas in das Plasma injiziert wird. Das Material des Prozessstrahls, das im Plasma zu einer Wolke dispergiert und dort teilweise oder vollständig geschmolzen oder zumindest plastifiziert wird, gelangt gleichmässig verteilt auf die Oberfläche des Substrats.

Wesentlich für die Erfindung ist nun die Erkenntnis, dass sich für eine metallische Matrix oder für eine Metalllegierung im Ausgangsmaterial der Gasfluss für den Prozessstrahl so einstellen lässt, dass aus der flüssigen Phase auch in solchen Bereichen eine Abscheidung erreicht werden kann, der bezüglich des Prozessstrahls im geometrischen Schatten liegt. Somit ist es möglich auch aus der flüssigen Phase des Prozessstrahls Material in versteckten oder inneren Bereichen abzuscheiden, die sich nicht in der direkten Sichtlinie des Prozessstrahls befinden (non-light of sight). Hierbei ist es wesentlich, den Energiegehalt des Plasmas so einzustellen, dass die Temperatur des metallischen Ausgangsmaterials im Prozessstrahl kleiner ist als die Siedetemperatur der metallischen Matrix bzw. der Metalllegierung. Die metallische Komponente soll lediglich plastifiziert oder geschmolzen werden, ein Verdampfen der metallischen Komponente soll - zumindest weitgehendvermieden werden. Die Partikeltemperatur des Ausgangsmaterials sollte 90%, vorzugsweise 80% und insbesondere 70% der Siedetemperatur der Metallmatrix bzw. der Metalllegierung nicht überschreiten.

Ein weiterer Parameter, welcher neben dem Energiegehalt des Plasmas die Partikeltemperatur des Ausgangsmaterials im Prozessstrahl beeinflusst, ist die Zuführrate, mit welcher das Ausgangsmaterial in das Plasma gefördert wird. Bei einer hohen Zuführrate ist die Verweildauer des Ausgangsmaterials in der Plasmaflamme deutlich geringer, sodass auch der Wärmeeintrag in die Partikel des Ausgangsmaterials im Mittel geringer ist, sodass sich auch über die Zuführrate gewährleisten lässt, dass die Temperatur des Ausgangsmaterials im Prozessstrahl kleiner ist als die Siedetemperatur der metallischen Matrix oder der Metalllegierung. Auch hierdurch lässt sich verhindern, dass die metallische Komponente verdampft wird. In der Praxis ist es die Kombination der Plasmaparameter mit der Zuführrate, über welche die Partikeltemperatur eingestellt wird.

Auch der Zuführwinkel, unter dem das Ausgangsmaterial in den Prozessstrahl eingebracht wird, beeinflusst die Partikeltemperatur des Ausgangsmaterials im Prozessstrahl. Im allgemeinen ist es üblich, dass das Ausgangsmaterial innerhalb der Austrittsdüse in den Prozessstrahl injiziert wird. Dabei kann das Ausgangsmaterial entweder senkrecht zur Stömungsrichtung des Prozessstrahls - also radial - in den Prozessstrahl eingebracht werden oder das Ausgangsmaterial wird schräg zur Strömungsrichtung des Prozessstrahls injiziert. In diesem Fall gibt es die beiden Varianten "upstream" und "downstream". Bei der upstream-Injektion wird das Ausgangsmaterial schräg und entgegen der Strömungsrichtung des Prozessstrahls injiziert, bei der downstream-Injektion wird das Ausgangsmaterial schräg in Richtung der Strömungsrichtung des Prozessstrahls eingebracht. Bei der upstream-Injektion resultiert ein höherer Wärmeeintrag in das Ausgangsmaterial, weil die Verweilzeit im Plasma und insbesondere im hochenergetischen Bereich in der Austrittsdüse grösser ist als bei der downstream-Injektion. Für das erfindungsgemässe Verfahren wird daher eine downstream-lnjektion bevorzugt, weil dies im Hinblick auf die Vermeidung einer wesentlichen Dampfphase der metallischen Komponente vorteilhafter ist.

Der Prozessdruck beträgt mindestens 50 Pa und höchstens 10 000 Pa. Bezüglich des Abstands ist es günstig, wenn die Spritzdistanz zwischen einer Austrittsdüse für den Prozessstrahl und dem Substrat zwischen 50 mm und 1500 mm liegt, vorzugsweise mehr als 400 mm beträgt und besonders bevorzugt zwischen 700 mm und 1000 mm liegt.

Hinsichtlich der Pulverzuführung ist es erfindungsmässig wenn für den Prozessstrahl eine Zuführrate von höchstens 160 g/min gewählt wird, und vorzugsweise mindestens 20 g/min. In der Praxis sind insbesondere Zuführraten bevorzugt, die 40 g/min bis 80 g/min betragen. In einer Konfiguration mit zwei oder mehr Injektoren für die Pulverzuführung werden diese Raten vorzugsweise gleichmässig auf alle Injektoren verteilt, d.h. bei zwei Injektoren wird bevorzugt pro Injektor mit einer Pulverzuführrate von 20 g/min bis 40 g/min gearbeitet, sodass sich insgesamt eine Zuführrate von 2×20 g/min bis 2×40 g/min ergibt.

Das erfindungsgemässe Verfahren eignet sich dafür, dass auf dem Substrat eine Korrosions- oder Erosionsschutzschicht hergestellt wird.

Bevorzugt wird mit dem erfindungsgemässe Verfahren auf dem Substrat eine metallische Schicht oder eine Hartmetallschicht hergestellt.

In einer bevorzugten Ausführungsform ist das Ausgangsmaterial eine Metalllegierung vom Typ MCrAIX ist, wobei M Nickel (Ni) und/oder Kobalt (Co) und/oder Eisen (Fe) bezeichnet und X Yttrium (Y) und/oder Zirkon (Zr) und/oder Hafnium (Hf). Mit diesen MCrAIX-Verbindungen. Besonders bevorzugt wird für X das Element Yttrium verwendet. Mit diesen Verbindungen lassen sich sehr gute Korrosionsschutzschichten herstellen. Erfindungsgemäss können diese MCrAIX-Verbindungen nun auch aus der flüssigen Phase im geometrischen Schattenbereich des Prozessstrahls erzeugt werden.

Speziell ist das erfindungsgemässe Verfahren auch geeignet, wenn auf dem Substrat eine Schicht hergestellt wird, die Wolframkarbid oder Chromkarbid sowie Nickel-Chrom oder Kobalt-Chrom enthält.

Eine andere bevorzugte Variante ist es, wenn auf dem Substrat eine Nickelchrom- oder eine Nickelchrom-Chromkarbidschicht hergestellt wird.

Vorzugsweise ist das Ausgangsmaterial ein Spritzpulver, das Partikel umfasst, von denen jedes im wesentlichen aus zwei Metallen und Kohlenstoff besteht, wobei das erste Metall einen Anteil umfasst, der mit dem zweiten Metall legiert ist, sowie einen weiteren Anteil, der mit dem Kohlenstoff ein Karbid bildet.

Dabei ist vorzugsweise das erste Metall Chrom, das zweite vorzugsweise Nickel und das Karbid in Form von Ausscheidungen gleichmässig in der metallischen Matrix verteilt.

Vorzugsweise ist das Ausgangsmaterial (P) ein Spritzpulver, das Partikel umfasst, deren Grösse 5 bis 50 Mikrometer beträgt, insbesondere 10 bis 20 Mikrometer. Diese Grösse hat sich bewährt, um eine Desintegration der einzelnen Partikel in kleinere Teilchen zu verhindern. Ausserdem kann bei dieser Partikelgrösse im Falle der Karbide verhindert werden, dass es zu einer thermischen Degradation der Karbide kommt.

Das Verfahren eignet sich insbesondere, wenn das Substrat das Laufrad einer Rotationsmaschine, insbesondere einer Pumpe, ist.

Ferner wird durch die Erfindung ein Substrat mit einer Beschichtung vorgeschlagen, welche mittels Plasmaspritzens hergestellt ist, wobei ein Ausgangsmaterial in Form eines Prozessstrahls auf das Substrat aufgespritzt wird, wobei das Ausgangsmaterial bei einem niedrigen Prozessdruck, der höchstens 20 000 Pa ist, in ein den Prozessstrahl defokussierendes Plasma injiziert und dort teilweise oder vollständig in eine flüssige oder plastifizierte Phase geschmolzen wird, wobei das Ausgangsmaterial eine metallische Matrix oder eine Metalllegierung enthält, die Temperatur des Ausgangsmaterials im Prozessstrahl kleiner ist als die Siedetemperatur der metallischen Matrix bzw. der Metalllegierung, dass ein Gasfluss für den Prozessstrahl eine Gesamtflussrate von 50 bis 200 SLPM aufweist und wobei die Beschichtung durch Abscheidung aus der flüssigen oder plastifizierten Phase hergestellt ist, und mindestens in einem Bereich vorgesehen ist, der sich bezüglich des Prozessstrahls im geometrischen Schatten befindet.

In einer bevorzugten Ausführungsform ist die Beschichtung eine Hartmetall- oder eine Karbidbeschichtung.

Weitere vorteilhafte Massnahmen und bevorzugte Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen teilweise im Schnitt:
- Fig. 1: eine schematische Darstellung einer Vorrichtung zur Durchführung eines erfindungsgemässen Verfahrens
- Fig. 2: eine Aufsicht auf das Laufrad, einer Pumpe, das mit einem erfindungsgemässen Verfahren beschichtet ist, und
- Fig. 3: eine schematische Schnittdarstellung eines Teils der oberen Hälfte (Deckel) des Laufrads aus Fig. 2

Das erfindungsgemässe Verfahren zum Beschichten eines Substrats wird mittels einer Plasmaspritzvorrichtung durchgeführt, die eine evakuierbare Prozesskammer umfasst.

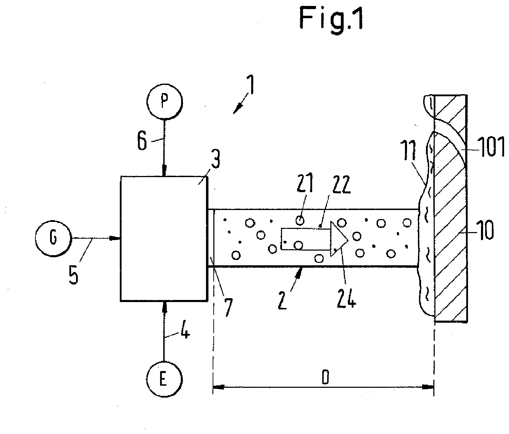

Fig. 1 zeigt in einer sehr schematischen Darstellung eine Plasmaspritzvorrichtung, die gesamthaft mit dem Bezugszeichen 1 bezeichnet ist, und die zur Durchführung eines erfindungsgemässen Verfahrens geeignet ist. Zudem ist in Figur 1 schematisch ein Substrat 10 dargestellt, auf welchem eine Schicht 11 abgeschieden wird.

Das erfindungsgemässe Verfahren umfasst vorzugsweise ein Plasmaspritzen, welches gattungsgemäss in der WO-A-03/087422 oder auch in der US-A-5,853,815 beschrieben ist. Dieses Plasmaspritzverfahren ist ein thermisches Spritzen zur Herstellung eines sogenannten LPPS-Dünnfilms (LPPS = Low Pressure Plasma Spraying).

Speziell wird mit der in Fig. 1 dargestellten Plasmaspritzvorrichtung 1 ein LPPS-Dünnfilm-Prozess (LPPS-TF = LPPS Thin Film) durchgeführt. Bei diesem wird ein konventionelles LPPS-Plasmaspritzverfahren verfahrenstechnisch abgewandelt, wobei ein von Plasma durchströmter Raum ("Plasmaflamme" oder "Plasmastrahl") aufgrund der Änderungen ausgeweitet und auf eine Länge von bis zu 2.5 m ausgedehnt wird. Die geometrische Ausdehnung des Plasmas führt zu einer gleichmässigen Aufweitung - einer "Defokussierung" - eines Prozessstrahls, der mit einem Fördergas in das Plasma injiziert wird. Das Material des Prozessstrahls, das im Plasma zu einer Wolke dispergiert und dort teilweise oder vollständig geschmolzen wird, gelangt gleichmässig verteilt auf die Oberfläche des Substrats 10.

Die in Fig. 1 dargestellte Plasmaspritzvorrichtung 1 umfasst einen an sich bekannten Plasmagenerator 3 mit einem nicht näher dargestellten Plasmabrenner zur Erzeugung eines Plasmas. In an sich bekannter Weise wird mit dem Plasmagenerator 3 aus einem Ausgangssmaterial P, einem Prozessgasgemisch G und elektrischer Energie E ein Prozessstrahl 2 erzeugt. Die Einspeisung dieser Komponenten E, G und P ist in Fig. 1 durch die Pfeile 4, 5, 6 symbolisiert. Der erzeugte Prozessstrahl 2 tritt durch eine Austrittsdüse 7 aus und transportiert das Ausgangssmaterial P in Form des Prozessstrahls 2 in dem Beschichtungsmaterial 21,22 in einem Plasma dispergiert sind. Dieser Transport ist durch den Pfeil 24 symbolisiert. Durch die unterschiedlichen Bezugszeichen 21,22 soll angedeutet werden, dass das Beschichtungsmaterial in mehreren Phasen vorliegen kann - aber nicht muss. Es ist zumindest eine flüssige Phase 21 vorhanden. Ferner kann zusätzlich eine feste und/oder eine gasförmige Phase 22 im Prozessstrahl 2 enthalten sein. Die Morphologie der auf dem Substrat 10 abgeschiedenen Schicht 11 ist von den Prozessparametern abhängig und insbesondere vom Ausgangsmaterial P, der Prozessenthalpie und der Temperatur des Substrats 10. Die evakuierbare Prozesskammer ist in Fig. 1 nicht dargestellt.

Bei dem hier beschriebenen LPPS-TF-Prozess wird bei einem niedrigen Prozessdruck, der höchstens 10 000 Pa ist, das Ausgangsmaterial P in ein den Materialstrahl defokussierendes Plasma injiziert und darin teilweise oder vollständig geschmolzen, sodass die flüssige Phase 21 entsteht. Dazu wird ein Plasma mit ausreichend hoher spezifischer Enthalpie erzeugt, so dass eine sehr dichte Schicht 11 auf dem Substrat entsteht. Die Struktur der Schicht, wie z. B. ihr Gefüge, ist durch die Beschichtungsbedingungen, insbesondere von Prozess-Enthalpie, Arbeitsdruck in der Prozesskammer sowie den Prozessstrahl wesentlich beeinflusst und steuerbar. Somit hat der Prozessstrahl 2 Eigenschaften, die durch steuerbare Prozessparameter bestimmt werden.

Wie dies in Fig. 1 angedeutet ist, weißt das Substrat 10 mindestens einen Bereich 101 auf, der sich bezüglich des Prozessstrahls 2 im geometrischen Schatten befindet. Dieser Bereich kann beispielsweise ein versteckter Bereich 101 oder eine innere Oberfläche des Substrats sein. Mit diesen geometrischen Schattenbereichen 101 oder versteckten bzw. abgedeckten Bereichen 101, sind solche gemeint, die beim Plasmaspritzen nicht direkt - im geometrischen Sinne - mit dem Prozessstrahl 2 beaufschlagt werden können Non-line of sight). Häufig ist es so, dass solche Bereiche 101 auch durch eine Rotation des Substrats 10 im Prozessstrahl 2 oder durch eine andere Relativbewegung zwischen Prozessstrahl 2 und Substrat 10 nicht erreicht werden können.

Erfindungsgemäss wird nun der Gasfluss für den Prozessstrahl 2 so eingestellt, dass das Substrat 10 durch Abscheidung aus der flüssigen Phase 21 in mindestens einem der Bereiche 101 beschichtet wird, der sich bezüglich des Prozessstrahls im geometrischen Schatten befindet. Wesentlich und überraschend ist dabei die Erkenntnis, dass es auch möglich ist im geometrischen Schattenbereich des Prozessstrahls 2 Abscheidungen aus der flüssigen Phase 21 zu erreichen.

Nun wird das Erzeugen der Schicht 11 mittels LPPS-TF näher erläutert.

Als Ausgangsmaterial P wird ein Pulver geeigneter Zusammensetzung gewählt, wie dies weiter hinten noch erläutert wird. Dieses Pulver enthält eine metallische Matrix oder eine Metalllegierung, vorzugsweise eine Metalllegierung vom Typ MCrAIX, wobei M Nickel (Ni) und/oder Kobalt (Co) und/oder Eisen (Fe) bezeichnet und X Yttrium (Y) und/oder Zirkon (Zr) und/oder Hafnium (Hf) Hierbei ist es eine Möglichkeit, dass das Ausgangsmaterial P in Form eines einzigen Pulvers vorliegt. Eine andere Möglichkeit besteht darin, als Ausgangsmaterial zwei oder mehr unterschiedliche pulverförmige Materialien zu verwenden, die als Pulvergemisch vorliegen können oder die gleichzeitig über zwei verschiedene Pulverzuführungen oder auch zeitlich nacheinander in die Plasmaflamme injiziert werden.

Wie bereits erwähnt, ist beim LPPS-TF-Verfahren die Plasmaflamme aufgrund der eingestellten Prozessparameter im Vergleich zu konventionellen Plasmaspritzverfahren sehr lang. Zudem ist die Plasmaflamme stark aufgeweitet. Es wird ein Plasma mit hoher spezifischer Enthalpie von beispielsweise bis zu 15 000 kJ/kg erzeugt, wodurch eine hohe Plasmatemperatur resultiert. Durch die hohe Enthalpie und die Länge bzw die Grösse der Plasmaflamme bedingt kommt es zu einem sehr hohen Energieeintrag in das Beschichtungsmaterial 21,22, das dadurch zum einen stark beschleunigt und zum anderen auf eine hohe Temperatur gebracht werden, sodass es sehr gut aufschmelzen bzw. plastifiziert werden kann.

Wichtig ist dabei jedoch, dass die Plasmatemperatur und die Zuführrate des Pulvers so aufeinander abgestimmt werden, dass die Temperatur der Partikel des Ausgangsmaterials P im Prozessstrahl 2 kleiner ist als die Siedetemperatur der metallischen Matrix bzw. der Metalllegierung, denn ein Verdampfen der metallischen Komponente soll verhindert werden.

Das Plasma wird beispielsweise in einem an sich bekannten Plasmabrenner im Plasmagenerator 3 mit einem elektrischen Gleichstrom und mittels einer Kathode oder mehrerer Kathoden sowie einer ringförmigen Anode erzeugt. Die dem Plasma zugeführte Leistung, die effektive Leistung, kann empirisch ermittelt werden. Die effektive Leistung, die durch die Differenz zwischen der elektrischen Leistung und der durch Kühlung abgeführten Wärme gegeben ist, liegt erfahrungsgemäss z. B. im Bereich von bis zu 80 kW. Hierzu hat es sich bewährt, wenn die Gesamtleistung des Systems zwischen 20 und 200 kW liegt.

Der Strom zur Generierung des Plasmas beträgt vorzugsweise 2000 bis 2600 A.

Für den Prozessdruck des LPPS-TF-Plasmaspritzens wird in der Prozesskammer ein Wert zwischen 50 und 2000 Pa gewählt, vorzugsweise zwischen 100 und 1000 Pa und speziell im Bereich von 150 Pa.

Das Ausgangsmaterial P wird als Pulverstrahl mit einem Fördergas, vorzugsweise Argon, Helium, Wasserstoff, oder ein Gemisch von mindestens zwei dieser Gase in das Plasma injiziert. Die Flussrate des Fördergases beträgt vorzugsweise 5 bis 40 SLPM (Standard Litre Per Minute).

Die Partikelgrösse im Ausgangsmaterial P ist bevorzugt zwischen 5 und 50 Mikrometer wobei der Bereich von 10 bis 20 Mikrometer besonders bevorzugt ist.

Das Prozessgas, das heisst, das Gas für den Prozessstrahl 2 für die Erzeugung des Plasmas ist vorzugsweise ein Gemisch von Inertgasen, insbesondere eine Gemisch von Argon Ar, Wasserstoff H und Helium He. In der Praxis haben sich die folgenden Gasflussraten für das Prozessgas besonders bewährt:
Ar-Flussrate: 50 bis 120 SLPM
H₂-Flussrate: Null bis 12 SLPM
He-Flussrate: Null bis 40 SLPM,
wobei die Gesamtflussrate des Prozessgases kleiner als 200 SLPM ist und mindestens 50 SLPM beträgt.

Die Zuführrate, mit der das Ausgangsmaterial P gefördert wird, liegt insbesondere bei höchstens 160 g/min und mindestens 20 g/min, vorzugsweise zwischen 40 und 80 g/min. In einer Konfiguration mit zwei oder mehr Injektoren für die Pulverzuführung werden diese Raten vorzugsweise gleichmässig auf alle Injektoren verteilt, d.h. bei zwei Injektoren wird bevorzugt pro Injektor mit einer Pulverzuführrate von 20 g/min bis 40 g/min gearbeitet, sodass sich insgesamt eine Zuführrate von 2×20 g/min bis 2×40 g/min ergibt.

Es kann vorteilhaft sein, wenn das Substrat während des Materialauftrags mit Dreh-oder Schwenkbewegungen relativ zum Prozessstrahl bewegt wird. Natürlich ist es auch möglich, den Plasmagenerator 3 relativ zum Substrat 10 zu bewegen.

Die Spritzdistanz, das heisst der Abstand D zwischen der Austrittsdüse 7 und dem Substrat 10 beträgt vorzugsweise 50 bis 1500 mm, insbesondere mehr als 400 mm und speziell 700 bis 1000 mm.

Das erfindungsgemässe Verfahren eignet sich insbesondere zum Herstellen von metallischen Korrosionsschutz- oder Erosionsschutzschichten.

Im speziellen eignet sich das erfindungsgemässe Verfahren zum Herstellen von Hartmetall- oder Karbidschichten auf Substraten mit internen oder versteckten Bereichen 101. Dazu ist insbesondere ein Pulver als Ausgangsmaterial P geeignet, wie es in der europäischen Patentanmeldung EP-A-0 960 954 beschrieben wird.

Dieses thermische Spritzpulver umfasst Partikel von denen jedes im Wesentlichen aus Nickel, Chrom und Kohlenstoff besteht, wobei das Chrom einen ersten Anteil umfasst, welcher mit dem Nickel eine Legierung bildet, die eine Matrix bildet, sowie einen zweiten Anteil, welcher mit dem Kohlenstoff ein Karbid bildet, das in Form von Ausscheidungen gleichmässig in der Matrix verteilt ist.

Natürlich eignen sich auch andere Metalle für derartige Hartmetallbeschichtungen oder Karbidbeschichtungen, beispielsweise Wolframkarbid. Ausser in der bereits erwähnten Nickel-Chrom-Matrix können das Wolframkarbid oder das Chromkarbid auch in einer Cobalt-Chrom -Matrix eingebettet werden.

Es versteht sich, dass auch Metalllegierungen ohne Karbide für die Herstellung von korrosionsresistenten Schichten verwendet werden können, beispielsweise Nickel-Chrom-Legierungen oder auch Metalle wie Zink

Im Folgend wird ein Beispiel gegeben, bei dem das Laufrad einer Rotationsmaschine, speziell das Laufrad einer Pumpe mit einer Hartmetallbeschichtung versehen wird.

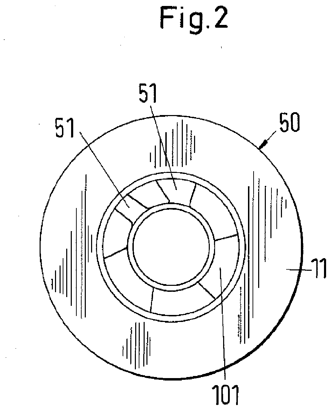

Fig. 2 zeigt eine Aufsicht auf das bereits beschichtete Laufrad einer Pumpe, das gesamthaft mit dem Bezugszeichen 50 bezeichnet ist und das mehrere gekrümmt ausgestaltete Schaufeln 51 umfasst. Zwischen diesen Schaufeln 51 entstehen somit versteckte Bereiche 101, welche sich im Beschichtungsprozess im geometrischen Schattenbereich des Prozessstrahls 2 befinden.

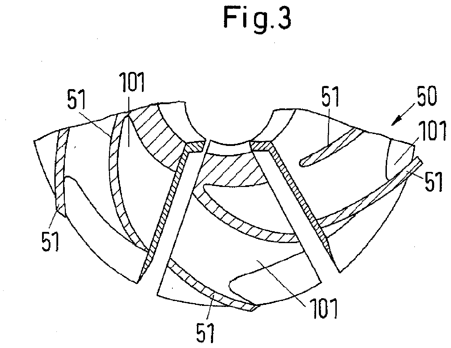

Fig. 3 zeigt eine schematische Schnittdarstellung eines Teils der darstellungsgemäss oberen Hälfte (Deckel) des Laufrads aus Fig. 2. Der Schnitt erfolgt senkrecht zur Achse, um die das Laufrad rotiert. In Fig. 3 sind beispielhaft drei verschieden Bereiche 101 markiert, die innere Oberflächen, bzw. verstecke Bereiche darstellen, welche sich während der Beschichtung im geometrischen Schattenbereich des Prozessstrahls 2 befinden.

Nachdem das Substrat 10, hier also das Laufrad 50 einer Pumpe in an sich bekannter Weise für die Beschichtung vorbereitet wurde, beispielsweise durch Reinigung, Sand- oder Kugelstrahlen, ionische Reinigung usw. seiner Oberfläche, wird es in die Prozesskammer eingebracht und auf einem beweglichen, beispielsweise rotierbaren Halter fixiert. In der Prozesskammer kann in an sich bekannter Weise eine zusätzliche ionische Reinigung mittels der Plasmaquelle und ein Vorheizen des Laufrads erfolgen, bevor der eigentliche Beschichtungsprozess beginnt. Das Vorheizen des Substrats 10 dient dazu, eine bessere Verbindung zwischen der Beschichtung und dem Substrat zu erzielen.

Die Spritzdistanz zwischen der Austrittsdüse 7 wird in Abhängigkeit vom Prozessdruck in der Prozesskammer gewählt, denn sowohl die Länge als auch der Durchmesser des Prozessstrahls 2 sind eine Funktion des Prozessdrucks. Im vorliegenden Beispiel ist der Prozessdruck 150 Pa und die Spritzdisrtanz D beträgt 700 mm. Hierdurch ist es möglich, mit der breiten Plasmaflamme eine grosse Oberfläche zu überdecken und den Plasmastrom bzw. den Prozessstrahl 2 zu zwingen die komplexe Geometrie des Laufrads zu durchdringen.

Der Plasmabrenner ist auf einer Achse angeordnet, sodass er relativ zum Substrat 10 bewegbar ist. Dadurch kann das gesamte Substrat 10 mit dem Plasma kontrolliert vorgeheizt werden und während der Beschichtung kann der Prozessstrahl 2 das gesamte Laufrad 50 überstreichen. Auf diese Weise kann auch die Dicke und die Qualität der abgeschiedenen Beschichtung kontrolliert werden.

Das Vorheizen des Laufrads 50 mittels des Plasmas kann beispielsweise mit den gleichen Plasmaparametern erfolgen wie das anschliessende Beschichten. Zum Vorheizen wird die Plasmaflamme einige Male über das gesamte Laufrad 50 bewegt, welches hierbei rotiert wird, um eine gleichmässige Erwärmung zu gewährleisten. Typischerweise wird das Laufrad 50 auf eine Temperatur zwischen 300 K und 500 K vorgeheizt.

Als Beschichtungsmaterial wird NiCr-CrC (Nickel-Chrom Chromkarbid) gewählt. Das Ausgangsmaterial P ist dabei das bereits erwähnte Pulver, welches in der EP-A-0 960 954 offenbart wird, nämlich ein thermisches Spritzpulver, bei welchem jedes Partikel im wesentlichen aus Nickel (Ni), Chrom (Cr) und Kohlenstoff C besteht, wobei ein erster Teil des Chroms mit dem Nickel eine Legierung bildet, welche eine Matrix formt, und wobei der zweite Teil des Chroms mit dem Kohlenstoff ein oder mehrere Chromkarbide (z.B. Cr₃C₂ oder Cr₇C₃) bildet, welche in Form von Ausscheidungen im wesentlichen gleichmässig in der NiCr-Matrix verteilt sind. Die typische Grösse der Ausscheidungen beträgt 0.1 µm bis 5 µm. Das Ausgangsmaterial P wird in an sich bekannter Weise mittels zweier Pulverförderer und einem Fördergas, hier Argon, in das Plasma eingebracht.

Für das Prozessgas, mit dem das Plasma bzw. der Prozessstrahl 2 erzeugt werden, wird eine Mischung aus Argon (Ar) und Wasserstoff (H₂) verwendet, wobei die Gasflussraten 60 SLPM für Ar und 12SLPM für H₂ betragen. Das Plasma wird mit einem Strom von 2400 A erzeugt, woraus sich eine Spannung von 43.75 V ergibt. Die Gesamtleistung beträgt dann 105 kW. Der Plasmabrenner ist wassergekühlt und ein Teil der Leistung wird an das Kühlsystem abgegeben. Daher resultiert für die Plasmaflamme eine reduzierte Leistung, die etwa 45% bis 55% der Gesamtleistung beträgt. Die Injektion des pulverförmigen Ausgangsmaterials P erfolgt unmittelbar in die Plasmaflamme, also in den Bereich hoher Enthalpie. Die beiden Pulverförderer liegen einander gegenüber. Die Zuführrate, mit der das Ausgangsmaterial in das Plasma eingebracht wird, beträgt 2 × 30g/min, also insgesamt 60 g/min. Für das Fördergas, hier Argon, wird eine Flussrate von 2 × 5 SLPM eingestellt. Die Beschichtungszeit beträgt zwischen 2 und 10 Minuten.

Nach der Beschichtung wird das Laufrad 50 abgekühlt, was beispielsweise in einer anderen Kammer als der Prozesskammer erfolgen kann. Diese Kammer, in welcher das Laufrad 50 abkühlt, wird vorzugsweise mit einem Inertgas, insbesondere Argon, auf einen vorgebbaren Druck gefüllt. Die Abkühlzeit und der Druck werden in Abhängigkeit von der Art des Substrats 10 und der Art der aufgebrachten Beschichtung so gewählt, dass innere Spannungen und Risse während des Abkühlens vermieden werden. Im vorliegenden Beispiel wird eine Abkühlzeit von 10 Minuten bei einem Druck von 50 000 Pa Argon gewählt.

Derartig erzeugte Beschichtungen, wie im vorliegenden Beispiel aus verdüstem (atomised) NiCr-CrC Ausgangsmaterial, haben typischerweise eine Mikrohärte von Hv(0.3) = 900 bis 950.

Das erfindungsgemässe Verfahren eignet sich also insbesondere zur Herstellung von metallischen Erosions- oder Korrosionsschutzschichten, wie Hartmetall- oder Karbidschichten, auf Substraten , die innere oder versteckte Oberflächen aufweisen, welche sich nicht in der Sichtlinie des Prozessstrahls befinden sondern in seinem geometrischen Schattenbereich.

Ferner eignet sich das erfindungsgemässe Verfahren auch zum Abscheiden solcher Schichten aus MCrAlX, wobei X besonders bevorzugt Yttrium ist.

Ausser dem bereits erwähnten Laufrad 50 einer Pumpe können dies beispielsweise auch Turbinenteile sein. Eine Turbine, beispielsweise eine Dampfturbine, eine stationäre Gasturbine oder ein Flugtriebwerk umfasst üblicherweise mehrere rotierende Laufräder und stationäre Leitelemente. Sowohl die Laufräder als auch die Leitelemente umfassen jeweils eine Vielzahl von Turbinenschaufeln. Die Turbinenschaufeln können jeweils einzeln mit ihrem Fuss auf einer gemeinsamen Achse der Turbine montiert sein oder sie können in Form von Segmenten vorgesehen sein, die jeweils mehrere Turbinenschaufeln umfassen. Diese Ausgestaltung wird häufig als Cluster-Vane-Segment oder je nach Anzahl der Turbinenschaufeln als Double-Vane-Segment, Triple-Vane-Segment usw. bezeichnet.

Insbesondere bei den Cluster-Vane-Segmenten ist das erfindungsgemässe Verfahren auch vorteilhaft einsetzbar, weil mit diesem Verfahren auch in Schattenbereichen beschichtet werden kann. Bei Cluster-Vane-Elementen existieren geometrische Schattenbereiche oder versteckte bzw. abgedeckte Bereiche, die beim Plasmaspritzen nicht direkt - im geometrischen Sinnemit dem Prozessstrahl beaufschlagt werden können. Häufig ist es so, dass solche Bereiche auch durch eine Rotation des Grundkörpers im Prozessstrahl oder durch eine andere Relativbewegung zwischen Prozessstrahl und Grundkörper nicht erreicht werden können. Mit dem erfindungsgemässen Verfahren kann auch in solchen Bereichen eine Beschichtung hergestellt werden, die sich im geometrischen Schatten des Prozessstrahls befinden, also nicht in der Sichtlinie des Prozessstrahls. Mit diesem Verfahren ist es folglich möglich, um Ecken, Kanten und Rundungen herum zu beschichten. Somit ist es beispielsweise möglich, dass die Turbinenschaufeln nicht mehr einzeln sondern in grösseren bereits montierten Clustern beschichtet werden können.

Bei einem Verfahren zum Beschichten eines Substrats nach Anspruch 1 wird ein Gasfluss für den Prozessstrahl (2) so eingestellt, dass das Substrat (10; 50) durch Abscheidung aus der flüssigen Phase (21) in mindestens einem Bereich (101) beschichtet wird, der sich bezüglich des Prozessstrahls (2) im geometrischen Schatten befindet.

## Patentansprüche

1. Verfahren zum Beschichten eines Substrats, bei welchem mittels Plasmaspritzens ein Ausgangsmaterial (P) in Form eines Prozessstrahls (2) auf das Substrat (10; 50) aufgespritzt wird, wobei das Ausgangsmaterial (P) bei einem niedrigen Prozessdruck, der mindestens 50 Pa und höchstens 10 000 Pa beträgt, in ein den Prozessstrahl (2) defokussierendes Plasma injiziert und dort teilweise oder vollständig in eine flüssige oder plastifizierte Phase (21) geschmolzen wird, wobei für den Prozessstrahl (2) eine Zuführrate von höchstens 160 g/min und mindestens 20 g/min gewählt wird, und dass ein Gasfluss für den Prozessstrahl (2) eine Gesamtflussrate von 50 bis 200 SLPM aufweist, **dadurch gekennzeichnet, dass** das Ausgangsmaterial (P) eine metallische Matrix oder eine Metalllegierung enthält, dass die Partikeltemperatur des Ausgangsmaterials (P) im Prozessstrahl (2) 90% der Siedetemperatur der metallischen Matrix bzw. der Metalllegierung nicht überschreiten, so dass das Substrat (10; 50) durch Abscheidung aus der flüssigen oder plastifizierten Phase (21) in mindestens einem Bereich (101) beschichtet wird, der sich bezüglich des Prozessstrahls (2) im geometrischen Schatten befindet.

2. Verfahren nach Anspruch 1, bei welchem die Spritzdistanz (D) zwischen einer Austrittsdüse (7) für den Prozessstrahl (2) und dem Substrat (10; 50) zwischen 50 mm und 1500 mm liegt, vorzugsweise mehr als 400 mm beträgt und besonders bevorzugt zwischen 700 mm und 1000 mm liegt.

3. Verfahren nach einem der vorangehenden Ansprüche, bei welchem auf dem Substrat (10; 50) eine Korrosions- oder Erosionsschutzschicht (11) hergestellt wird.

4. Verfahren nach einem der vorangehenden Ansprüche, bei welchem das Ausgangsmaterial (P) eine Metalllegierung vom Typ MCrAlX ist, wobei M Nickel (Ni) und/oder Kobalt (Co) und/oder Eisen (Fe) bezeichnet und X Yttrium (Y) und/oder Zirkon (Zr) und/oder Hafnium (Hf).

5. Verfahren nach einem der vorangehenden Ansprüche, bei welchem auf dem Substrat (10; 50) eine Hartmetallschicht (11) oder eine Karbidschicht (11) hergestellt wird.

6. Verfahren nach einem der vorangehenden Ansprüche, bei welchem auf dem Substrat (10; 50) eine Schicht (11) hergestellt wird, die Wolframkarbid oder Chromkarbid sowie Nickel-Chrom oder Kobalt-Chrom enthält.

7. Verfahren nach einem der vorangehenden Ansprüche, bei welchem auf dem Substrat (10; 50) eine Nickelchrom- oder eine Nickelchrom-Chromkarbidschicht hergestellt wird.

8. Verfahren nach einem der vorangehenden Ansprüche, wobei das Ausgangsmaterial (P) ein Spritzpulver ist, das Partikel umfasst, von denen jedes im wesentlichen aus zwei Metallen und Kohlenstoff besteht, wobei das erste Metall einen Anteil umfasst, der mit dem zweiten Metall legiert ist, sowie einen weiteren Anteil, der mit dem Kohlenstoff ein Karbid bildet.

9. Verfahren nach Anspruch 10, wobei das erste Metall Chrom ist und das zweite vorzugsweise Nickel und wobei das Karbid in Form von Ausscheidungen gleichmässig in der metallischen Matrix verteilt ist.

10. Verfahren nach einem der voranfehenden Ansprüche, wobei das Ausgangsmaterial (P) ein Spritzpulver ist, das Partikel umfasst, deren Grösse 5 bis 50 Mikrometer beträgt, insbesondere 10 bis 20 Mikrometer.

11. Verfahren nach einem der vorangehenden Ansprüche, bei welchem das Substrat das Laufrad (50) einer Rotationsmaschine, insbesondere einer Pumpe, ist.

## Claims

1. A method for coating a substrate, in which a starting material (P) in the form of a process jet (2) is sprayed onto the substrate (10; 50) by means of plasma spraying, wherein the starting material (P) is injected at a low process pressure, which is at least 50 Pa and at most 10 000 Pa into a plasma defocusing the process jet (2), and is there partially or completely melted into a liquid or plasticized phase (21), wherein a feed rate of at most 160 g/min and at least 20 g/min is selected for the process jet (2), and that a gas flow for the process jet (2) has a total flow rate of 50 to 200 SLPM, **characterized in that** the starting material (P) contains a metallic matrix or a metal alloy, **in that** the particle temperature of the starting material (P) in the process jet (2) does not exceed 90% of the boiling temperature of the metallic matrix or metal alloy, so that the substrate (10; 50) is coated by deposition from the liquid or plasticized phase (21) in at least one region (101) which is in the geometric shadow with respect to the process jet (2).

2. A method according to claim 1, in which the spraying distance (D) between an outlet nozzle (7) for the process jet (2) and the substrate (10; 50) lies between 50 mm and 1500 mm, is preferably more than 400 mm and lies particularly preferably between 700 mm and 1000 mm.

3. A method according to anyone of the preceding claims, in which a corrosion or erosion protection layer (11) is produced on the substrate (10; 50).

4. A method according to anyone of the preceding claims, in which the starting material (P) is a metal alloy of the MCrAlX type, wherein M designates nickel (Ni) and/or cobalt (Co) and/or iron (Fe) and X designates yttrium (Y) and/or zirconium (Zr) and/or hafnium (Hf).

5. A method according to anyone of the preceding claims, in which a hard metal layer (11) or a carbide layer (11) is produced on the substrate (10; 50).

6. A method according to anyone of the preceding claims, in which a layer (11) containing tungsten carbide or chromium carbide and nickel-chromium or cobalt-chromium is produced on the substrate (10; 50).

7. A method according to anyone of the preceding claims, in which a nickel-chromium or a nickel-chromium-chromium carbide layer is produced on the substrate (10; 50).

8. A method according to anyone of the preceding claims, wherein the starting material (P) is a spray powder comprising particles, each of which consists essentially of two metals and carbon, the first metal comprising a portion alloyed with the second metal and another portion forming a carbide with the carbon.

9. A method according to claim 10, wherein the first metal is chromium and the second is preferably nickel and wherein the carbide is uniformly distributed in the metallic matrix in the form of precipitates.

10. A method according to anyone of the preceding claims, wherein the starting material (P) is a spray powder comprising particles whose size is 5 to 50 micrometers, in particular 10 to 20 micrometers.

11. A method according to anyone of the preceding claims, in which the substrate is the impeller (50) of a rotary machine, in particular of a pump.

## Revendications

1. Un procédé pour le revêtement d'un substrat, dans lequel un produit de départ (P) sous la forme d'un jet de processus (2) est pulvérisée sur le substrat (10; 50) au moyen d'une pulvérisation de plasma, dans lequel le produit de départ (P) est injectée à une faible pression de processus, qui est d'au moins 50 Pa et d'au plus 10 000 Pa, dans un plasma défocalisant le jet de processus (2), où il est partiellement ou complètement fondu en une phase liquide ou plastifiée (21), dans lequel un débit d'alimentation d'au plus 160 g/min et d'au moins 20 g/min est sélectionné pour le jet de processus (2), et qu'un flux de gaz pour le jet de processus (2) a un débit total de 50 à 200 SLPM, **caractérisé en ce que** le produit de départ (P) contient une matrice métallique ou un alliage métallique, **en ce que** la température des particules du produit de départ (P) dans le jet de processus (2) ne dépasse pas 90 % de la température d'ébullition de la matrice métallique ou de l'alliage métallique, de sorte que le substrat (10; 50) est revêtu par dépôt à partir de la phase liquide ou plastifiée (21) dans au moins une région (101) qui est dans l'ombre géométrique par rapport au jet de processus (2).

2. Un procédé selon la revendication 1, dans lequel la distance de pulvérisation (D) entre une buse de sortie (7) pour le jet de processus (2) et le substrat (10; 50) est comprise entre 50 mm et 1500 mm, est de préférence supérieure à 400 mm et est particulièrement préférable entre 700 mm et 1000 mm.

3. Un procédé selon l'une des revendications précédentes, dans lequel une couche de protection contre la corrosion ou l'érosion (11) est produite sur le substrat (10; 50).

4. Un procédé selon l'une des revendications précédentes, dans lequel le produit de départ (P) est un alliage métallique du type MCrAlX, où M désigne le nickel (Ni) et/ou le cobalt (Co) et/ou le fer (Fe) et X désigne l'yttrium (Y) et/ou le zirconium (Zr) et/ou le hafnium (Hf).

5. Un procédé selon l'une des revendications précédentes, dans lequel une couche de métal dur (11) ou une couche de carbure (11) est produite sur le substrat (10; 50).

6. Un procédé selon l'une des revendications précédentes, dans lequel une couche (11) qui contient du carbure de tungstène ou du carbure de chrome et du nickel-chrome ou du cobalt-chrome est produite sur le substrat (10; 50).

7. Un procédé selon l'une des revendications précédentes, dans lequel une couche de nickel-chrome ou de nickel-chrome-carbure de chrome est produite sur le substrat (10; 50).

8. Un procédé selon l'une des revendications précédentes, dans lequel le produit de départ (P) est une poudre de pulvérisation comprenant des particules constituées chacune essentiellement de deux métaux et de carbone, dans lequel le premier métal comprend une partie alliée avec le second métal et une autre partie formant un carbure avec le carbone.

9. Un procédé selon la revendication 10, dans lequel le premier métal est le chrome et le second est de préférence le nickel et dans lequel le carbure est uniformément distribué dans la matrice métallique sous forme de précipités.

10. Un procédé selon l'une des revendications précédentes, dans lequel le produit de départ (P) est une poudre de pulvérisation comprenant des particules dont la taille est de 5 à 50 micromètres, en particulier de 10 à 20 micromètres.

11. Un procédé selon l'une des revendications précédentes, dans lequel le substrat est la roue à aubes (50) d'une machine rotative, en particulier d'une pompe.
